# EUROPEAN PATENT APPLICATION

(11) **EP 4 303 293 A1**
(43) Date of publication of application: **10.01.2024**
(21) Application number: 21929200.0
(22) Date of filing: 08.12.2021
(51) Int. Cl.: C12G 3/04, C12G 3/06

(54) **LOW-ALCOHOL BEVERAGE**

(30) Priority: 03.03.2021 JP 2021033496; 03.03.2021 JP 2021033497
(71) Applicant: Asahi Group Holdings, Ltd., Tokyo 130-8602 (JP); Asahi Breweries, Ltd., Tokyo 130-8602 (JP)
(72) Inventor: HAYASHI, Nobuaki, Moriya-shi, Ibaraki 302-0106 (JP); ENDO, Minori, Moriya-shi, Ibaraki 302-0106 (JP)
(74) Representative: J A Kemp LLP
(86) International application number: PCT/JP2021/045092
(87) International publication number: WO 2022/185642

(57) **Abstract**

A low-alcohol beverage of the present invention is a citrus-savored low-alcohol beverage having an alcohol concentration of 3.0 v/v% or less, the low-alcohol beverage containing 0.1 to 2.5 v/v% gin converted to 100% of alcohol.

## Description

### TECHNICAL FIELD

The present invention relates to a low-alcohol beverage. More specifically, it relates to a low-alcohol beverage, a method for producing a low-alcohol beverage, and a method for improving a flavor of a low-alcohol beverage.

### BACKGROUND ART

In recent years, the market for a non-alcohol beverage having the flavor of an alcohol beverage is expanding.

A non-alcohol beverage is a beverage having an alcohol less than 1% and not falling within the definition of alcohol beverage under the Liquor Tax Act. Among non-alcohol beverages, non-alcohol beverages having an alcohol concentration indicated as 0.00% are also called non-alcohol beverages.

On the other hand, it is known that non-alcohol beverages having an alcohol content of less than 1% and low-alcohol beverages having an alcohol content of about 1% to 3% have a problem of flavor that a distinctive well-seasoned feelings, thick taste, and complicated taste that the alcohol itself has been lacking due to low alcohol concentration. Above all, for people who like the taste of authentic alcohol and the atmosphere of places where they drink alcohol, but who refrain from consuming alcohol for various reasons, there was dissatisfaction that conventional non-alcohol beverages and low-alcohol beverages were poor in the taste of authentic alcohol.

Therefore, the development of low-alcohol beverages, which are low-alcohol beverages but still have a feeling of alcohol and an alcohol-like savor, is progressing. For example, Patent Document 1 discloses a non-alcohol beverage having a citronellol concentration of 0.2 ppm or more and less than 10 ppm and an ethanol concentration of less than 1.0 v/v%. In addition, Patent Document 2 discloses a non-alcohol beverage having a propanol concentration of 6 to 2000 ppm in the beverage and alcohol content of less than 1%, and containing a bitter substance, to which an alcohol-like savor is imparted. Furthermore, Patent Document 3 discloses a low-alcohol beverage containing at least one of n-propanol, isobutyl alcohol, and isoamyl alcohol, and having alcohol content of 1.0 v/v% or more and less than 3.0 v/v%, in which a sweetness/acidity range is specified and the alcohol-like taste is enhanced. Furthermore, Patent Document 4 discloses a non-alcohol beverage imparted with a feeling of an alcohol, containing 1 to 100 mg/l of an aliphatic alcohol having 4 or 5 carbon atoms and an astringent taste imparting substance.

### RELATED DOCUMENTS

### PATENT DOCUMENTS

[Patent Document 1] Japanese Unexamined Patent Publication No. 2012-249560
[Patent Document 2] Japanese Unexamined Patent Publication No. 2014-103919
[Patent Document 3] Japanese Unexamined Patent Publication No. 2016-123415
[Patent Document 4] Japanese Unexamined Patent Publication No. 2012-60975

### SUMMARY OF THE INVENTION

### TECHNICAL PROBLEM

However, in conventional low-alcohol beverages as disclosed in Patent Documents 1 to 4, there is room for improvement in flavor such as taste of authentic alcohol.

The present inventors have studied from the viewpoint of improving the flavor of citrus-savored low-alcohol beverages having an alcohol concentration of 3.0 v/v% or less, have found that combining a specific amount of gin with the citrus savor can effectively improve the balance between the alcohol-like complicated taste and alcohol-like aftertaste, and have completed the present invention.

### SOLUTION TO PROBLEM

According to the invention,
a citrus-savored low-alcohol beverage having an alcohol concentration of 3.0 v/v% or less, the low-alcohol beverage containing 0.1 to 2.5 v/v% gin converted to 100% of the alcohol, is provided.

In addition, according to the present invention,
a method for producing a low-alcohol beverage that is a method for producing a citrus-savored low-alcohol beverage having an alcohol concentration of 3.0 v/v% or less, the method including
a step of blending 0.1 to 2.5 v/v % gin converted to 100% alcohol.

In addition, according to the present invention,
a method for improving a flavor of a low-alcohol beverage that is a method for improving a flavor of a citrus-savored low-alcohol beverage having an alcohol concentration of 3.0 v/v% or less, the method including
a step of blending 0.1 to 2.5 v/v % gin converted to 100% alcohol.

### ADVANTAGEOUS EFFECTS OF INVENTION

According to the present invention, the technique which can improve the flavor of a low-alcohol beverage and can improve the balance between the alcohol-like complicated taste and alcohol-like aftertaste, can be provided.

### DESCRIPTION OF EMBODIMENTS

Hereinafter, embodiments of the present invention will be described in detail. In this specification, the notation "a to b" in the description of numerical ranges means a or more and b or less, unless otherwise specified.

In the present specification, "sweetness" is a parameter indicating the intensity of sweetness of each sweetener when compared with sucrose. Values described in "Comprehensive List of Sweeteners" (published by Japan Sugar Refiners' Association, May 1990), "All About High-sweetness Sweetener Sucralose" (published by Korin Publishing Co., Ltd., May 2003), "Glossary of Beverages" (published by Beverage Japan Inc., June 25, 1999), or the like can be adopted. In a case where the value of sweetness described varies, the median value is adopted. For example, as the sweetness of the representative sweeteners, sucrose is 1, glucose is 0.65, fructose is 1.5, sucralose is 600, acesulfame potassium is 200, and aspartame is 200.

The sweetness in terms of sucrose of the low-alcohol beverage of the present embodiment is the intensity of sweetness of the beverage converted to the intensity of sweetness of an aqueous solution of sucrose, and the intensity of sweetness equivalent to an aqueous solution containing X g/100 ml of sucrose is defined as X g/100 ml of sweetness in terms of sucrose.

The sweetness in terms of sucrose in the present embodiment can be calculated based on the sweetness of the sweetening component indicated on the container of the packaged low-alcohol beverage and the content of the sweetening component specified by analysis or the like. In a case where the sweetness cannot be calculated by the above method, a sensory evaluation using a standard sweetness solution can be performed by a trained taste sensory panelist to specify the concentration of the sucrose solution that has sweetness equivalent to that of the low-alcohol beverage and to define the concentration as the sweetness.

### <Low-alcohol beverage>

The low-alcohol beverage of the present embodiment has an alcohol concentration of 3.0 v/v% or less, exhibits a citrus savor, and contains 0.1 to 2.5 v/v% gin converted to 100% alcohol.

As a result, the balance between the alcohol-like complicated taste and alcohol-like aftertaste can be effectively improved. Although the details of such reason are not clear, it is presumed that the combination of the flavor such as bitterness and freshness unique to gin and the savor of citrus increases the complexity of the flavor, leading to an alcohol-like taste.

### [Alcohol concentration (alcohol content)]

In the present embodiment, the low-alcohol beverage has an alcohol concentration of 3.0 v/v% or less, preferably 1.5 v/v% or less, more preferably 1.0 v/v% or less, and still more preferably 0.8 v/v% or less.

By setting the alcohol concentration to be not more than the above upper limit, the balance between the alcohol-like complicated taste and alcohol-like aftertaste can be effectively improved while being low alcohol.

In the present specification, so-called non-alcohol beverages having alcohol content of less than 1% are also treated as included in low-alcohol beverages.

### [Citrus savor]

The citrus savor is one in which a savor unique to citrus fruits is given.

Citrus fruits mean fruits of plants belonging to the Rutaceae subfamily Aurantioideae. Specific examples of citrus fruits include oranges such as Navel orange, Valencia orange, and Blood orange, citruses such as Unshu orange, Mandarin orange, Ponkan, Kishu orange, Encore, Tangerine, Koji, Shekwasha, Tachibana, and Shiranui, miscellaneous citruses such as Natsudaidai, Hassaku, Hyuganatsu, Sanbokan, Kawachi bankan, Kinukawa, and Naruto, tangors and tangeloes such as Tankan, Iyokan, Murcott, Kiyomi, an Orlando, Minneola, and Seminole, limes such as Mexican lime and Tahiti lime, lemons such as Lisbon lemon, Eureka lemon, Diamante, and Etrog, a shaddock such as Banpeiyu and Tosa shaddock, grapefruits such as Duncan, Marsh, Thompson, and Ruby red, citrons such as Yuzu, Kabosu, Sudachi, Hanayu, and Kizu, Kumquat, and Trifoliate orange.

From the viewpoint of effectively obtaining the alcohol-like complicated taste and alcohol-like aftertaste, oranges, lemons, and grapefruits are preferred and lemons and grapefruits are more preferred among these.

### [Gin]

Gin is a colorless and transparent distilled liquor made from fermented liquid of grains such as barley, rye, and potatoes flavored with a juniper berry (fruit of common juniper). Juniper berries contain α-pinene, terpineol, and the like as characteristic fragrance components.

The low-alcohol beverage of the present embodiment may be a beverage in which raw material alcohol is mainly used as the base liquor and gin is used in a small amount.

The low-alcohol beverage of the present embodiment has a gin-derived alcohol content of 0.1 to 2.5 v/v%, preferably 0.1 to 0.9 v/v%, more preferably 0.2 to 0.8 (v/v%), still more preferably 0.35 to 0.8 (v/v%) converted to 100% of the alcohol. By setting the content of the gin-derived alcohol within such numerical range, the balance between the alcohol-like complicated taste and alcohol-like aftertaste can be effectively improved.

### [Sweetness in terms of sucrose]

The sweetness in terms of sucrose of the low-alcohol beverage of the present embodiment is preferably 2.0 to 8.0 g/100 ml, more preferably 3.0 to 8.0 g/100 ml, and from the viewpoint of improving the alcohol-like complicated taste, still more preferably 4.5 to 7.5 g/100 ml.

As described above, the sweetness in terms of sucrose can be adjusted based on the sweetness of the sweetening components to be blended and the blending amounts of these sweetening components.

Furthermore, it is considered that the addition of moderate sweetness imparts a body feeling and improves the alcohol-like complicated taste and alcohol-like aftertaste of the overall beverage with good balance.

### [Acidity]

The acidity in terms of citric acid of the low-alcohol beverage of the present embodiment is preferably 0.20 to 0.50 g/100 ml and more preferably 0.25 to 0.45 g/100 ml.

By setting the acidity to be equal to or more than the above lower limit value, the alcohol-likeness and deliciousness can be obtained. On the other hand, by setting the acidity to be equal to or less than the above upper limit value, excessive sourness can be suppressed, and both the alcohol-like complicated taste and aftertaste can be achieved. The acidity can be adjusted by blending an acidulant, a pH adjuster, or the like, which will be described later.

The acidity can be expressed in grams in a case where the amount of acid contained in 100 ml is converted to citric acid (anhydrous citric acid g/100 ml). The acidity can also be measured by a method defined by the JAS standard acidity measurement method, specifically by a neutralization titration method (quantitative) using a 0.1 mol/L sodium hydroxide standard solution as an alkaline solution.

Hereinafter, each component contained in the low-alcohol beverage (hereinafter also simply referred to as "beverage") of the present embodiment will be described.

### [Aliphatic alcohol having 4 or 5 carbon atoms]

The beverage of the present embodiment may contain an aliphatic alcohol having 4 or 5 carbon atoms.

As a result, the balance between the alcohol-like complicated taste and alcohol-like aftertaste can be more effectively improved. Although the details of such reason are not clear, it is considered that the combination of the flavor such as bitterness and freshness unique to gin and the savor of an aliphatic alcohol having 4 or 5 carbon atoms increases the complexity of the flavor, leading to an alcohol-like taste and deepness, and improving the alcohol-like complicated taste and alcohol-like aftertaste of the overall beverage with good balance.

The aliphatic alcohol having 4 or 5 carbon atoms is a compound having a linear, branched, or alicyclic structure of 4 or 5 carbon atoms and having at least one hydroxyl group. Among these, a linear or branched aliphatic alcohol is preferable, and a monohydric alcohol is suitable.

Specific examples of an aliphatic alcohol having 4 or 5 carbon atoms include 2-methyl-1-propanol, 3-methyl-1-butanol, 1-butanol, and 1-pentanol. These are preferably used alone or in combination of two or more, and it is more preferable that the aliphatic alcohol having 4 or 5 carbon atoms includes one or two or more selected from the group consisting of 2-methyl-1-propanol and 3-methyl-1-butanol among them.

The beverage of the present embodiment contains preferably 0.1 to 80 ppm and more preferably 0.5 to 60 ppm of an aliphatic alcohol having 4 or 5 carbon atoms.

The content of the aliphatic alcohol having 4 or 5 carbon atoms in the beverage of the present embodiment can be measured by a known method, for example, can be measured by high performance liquid chromatography (HPLC) method.

### [Sweetener]

The beverage of the present embodiment may contain a sweetener from the viewpoint of controlling sweetness. Examples of sweetener include a sweetening component of sugars such as fructose, sucrose, glucose, granulated sugar, isomerized sugar syrup, lactose, and maltose, low-sweetness sweeteners such as xylitol and D-sorbitol, and high-sweetness sweetener such as thaumatin, stevia extract, disodium glycyrrhizinate, acesulfame potassium, sucralose, aspartame, saccharin, neotame, and sodium saccharin. These may be used singly or in combination of two or more.

Above all, it is preferable that the beverage of the present embodiment does not contain a high-sweetness sweetener.

### [Flavor]

The beverage of the present embodiment may contain a flavor. Examples of flavors include natural flavors and synthetic flavors, include flavors exhibiting a fruit savor of citrus fruits, and include flavors exhibiting other fruit savor. Citrus fruits can be used without particular limitation as long as they are suggestive of the citrus fruits described above. Among them, a flavor giving citrus flavors such as lemons, oranges and grapefruits is preferable, and a flavor giving flavors of lemons and grapefruits is more preferable.

### [Citrus fruits-infused distilled liquor]

The beverage of the present embodiment may include a citrus fruits-infused distilled liquor.

The citrus fruits-infused distilled liquor of the present embodiment is a distilled liquor in which a savor of citrus fruits imparted by immersing fruit, peel, and the like of citrus fruits in an alcohol-containing liquid, leaving it for a predetermined time to extract the components, and then distilling the alcohol-containing liquid.

Examples of an alcohol-containing liquid used for immersion distilled liquor include spirits, whiskeys, shochus, brandies, raw material alcohols, and these may be used singly or in combination of two or more. As the immersion method and the distillation method related to the preparation of the immersion distilled liquor or the like, a known method can be used.

Examples of citrus fruits can also include the same citrus fruits as mentioned above.

The content of the citrus fruits-infused distilled liquor is preferably 0.005 to 0.1 v/v% and more preferably 0.01 to 0.05 v/v% with respect to the total amount of the beverage of the present embodiment.

By containing the citrus fruits-infused distilled liquor, the beverage of the present embodiment can further improve the alcohol-like complicated taste and alcohol-like aftertaste.

### [Acidulant]

The beverage of the present embodiment may contain an acidulant. Examples of an acidulant include citric acid, lactic acid, adipic acid, gluconic acid, succinic acid, tartaric acid, fumaric acid, malic acid, phytic acid, ascorbic acid, phosphoric acid, and salts thereof. These may be used singly or in combination of two or more.

### [Other components]

The beverage of the present embodiment may contain other components other than the above as long as the effects of the present invention are exhibited. Specifically, components normally blended in beverages such as vitamins, coloring agents, salt, antioxidants, emulsifiers, preservatives, seasonings, extracts, pH adjusters, quality stabilizers, and thickeners, can be contained.

In addition, from the viewpoint of improving the alcohol savor, it is preferable that the beverage of the present embodiment does not contain fruit juice.

### [Carbon dioxide gas]

The beverage of the present embodiment may contain carbon dioxide gas. The carbon dioxide gas pressure of the beverage is preferably 1.5 to 3.5 gas volumes and more preferably 2.0 to 3.0 gas volumes. The feeling of carbonic acid can improve the alcohol savor.

The method of incorporating carbon dioxide gas into the beverage is not particularly limited, and can be appropriately set by those skilled in the art.

### [Container]

Examples of the container used for the beverage of the present embodiment include a hermetically sealed container made of a single substance such as glass, paper, plastic (polyethylene terephthalate, and the like), aluminum, steel, a composite material thereof, or a laminated material. In addition, the type of container is not particularly limited, but examples thereof include PET bottles, aluminum cans, steel cans, paper packs, chilled cups, and bottles.

The volume of the beverage is not particularly limited, but is preferably 100 to 2000 ml, and more preferably 100 to 500 ml from the viewpoint of easy drinking off.

The method of heat sterilization for packaged beverages is not particularly limited, but heat sterilization is performed in accordance with the provisions of the Food Sanitation Act in Japan. Specific examples thereof include a method of sterilizing the beverage at a high temperature for a short time and then filling a storage container sterilized under aseptic conditions (UHT sterilization method) and a retort sterilization method of filling a storage container such as a can with the preparation solution and then performing retort processing.

### <Method for producing low-alcohol beverage>

The method for producing a low-alcohol beverage according to the present embodiment is a method for producing a citrus-savored low-alcohol beverage having an alcohol concentration of 3.0 v/v% or less, including a step of blending 0.1 to 2.5 v/v % gin converted to 100% alcohol. As a result, the balance between the alcohol-like complicated taste and alcohol-like aftertaste can be effectively improved. A mixing method is not particularly limited, and a known method can be used. Each component contained in the low-alcohol beverage and its content are the same as those of the low-alcohol beverage described above.

### <Method for improving flavor of low-alcohol beverage>

The method for improving a flavor of a low-alcohol beverage according to the present embodiment is a method for improving a flavor of a citrus-savored low-alcohol beverage having an alcohol concentration of 3.0 v/v% or less, including a step of blending 0.1 to 2.5 v/v % gin converted to 100% alcohol. As a result, the balance between the alcohol-like complicated taste and alcohol-like aftertaste can be effectively improved. A mixing method is not particularly limited, and a known method can be used. Each component contained in the low-alcohol beverage and its content are the same as those of the low-alcohol beverage described above.

Although the embodiments of the present invention have been described above, these are examples of the present invention, and various configurations other than those described above can be employed.

Hereinafter, an example of the reference form of the present invention is described.
<1> A low-alcohol beverage that is a citrus-savored low-alcohol beverage having an alcohol concentration of 3.0 v/v% or less, in which the low-alcohol beverage contains gin and has sweetness in terms of sucrose of 2.0 to 8.0 g/100 ml.
<2> The low-alcohol beverage according to <1>, in which the alcohol concentration is less than 1.0 v/v%.
<3> The low-alcohol beverage according to <1> or <2>, which contains 0.1 to 0.9 v/v% gin converted to 100% alcohol.
<4> The low-alcohol beverage according to any one of <1> to <3>, which contains a citrus-savored flavor.
<5> The low-alcohol beverage according to any one of <1> to <4>, which contains a citrus fruits-infused distilled liquor.
<6> The low-alcohol beverage according to any one of <1> to <5>, which does not contain fruit juice.
<7> The low-alcohol beverage according to any one of <1> to <6>, which does not contain a high-sweetness sweetener.
<8> The low-alcohol beverage according to any one of <1> to <7>, in which acidity in terms of citric acid is 0.20 g/100 ml or more.
<9> The low-alcohol beverage according to any one of <1> to <8>, which contains carbon dioxide gas.
<10> The low-alcohol beverage according to <9>, in which a carbon dioxide gas pressure is 1.5 to 3.5 gas volumes.
<11> The low-alcohol beverage according to any one of <1> to <10>, which is packaged in a container.
<12> A method for producing a low-alcohol beverage that is a method for producing a citrus-savored low-alcohol beverage having an alcohol concentration of 3.0 v/v% or less, the method including a step of blending gin and adjusting the sweetness in terms of sucrose to 2.0 to 8.0 g/100 ml.
<13> A method for improving a flavor of a low-alcohol beverage that is a method for improving a flavor of a citrus-savored low-alcohol beverage having an alcohol concentration of 3.0 v/v% or less, the method including a step of blending gin and adjusting the sweetness in terms of sucrose to 2.0 to 8.0 g/100 ml.

Furthermore, another example of the reference form of the present invention is described.
<1> A low-alcohol beverage having an alcohol concentration of 3.0 v/v% or less, which contains an aliphatic alcohol having 4 or 5 carbon atoms and contains gin.
<2> The low-alcohol beverage according to <1>, which contains 0.10 to 2.5 v/v% gin converted to 100% alcohol.
<3> The low-alcohol beverage according to <1> or <2>, in which an alcohol concentration is less than 1.0 v/v%.
<4> The low-alcohol beverage according to any one of <1> to <3>, which contains 0.1 to 80 ppm of the aliphatic alcohol having 4 or 5 carbon atoms.
<5> The low-alcohol beverage according to any one of <1> to <4>, in which the aliphatic alcohol having 4 or 5 carbon atoms includes one or two or more selected from the group consisting of 2-methyl-1-propanol, 3-methyl-1-butanol, 1-butanol, and 1-pentanol.
<6> The low-alcohol beverage according to <5>, in which the aliphatic alcohol having 4 or 5 carbon atoms includes one or two selected from the group consisting of 2-methyl-1-propanol and 3-methyl-1-butanol.
<7> The low-alcohol beverage according to any one of <1> to <6>, which has a citrus savor.
<8> The low-alcohol beverage according to any one of <1> to <7>, which does not contain fruit juice.
<9> The low-alcohol beverage according to any one of <1> to <8>, which does not contain a high-sweetness sweetener.
<10> The low-alcohol beverage according to any one of <1> to <9>, in which acidity in terms of citric acid is 0.20 g/100 ml or more.
<11> The low-alcohol beverage according to any one of <1> to <10>, which contains carbon dioxide gas.
<12> The low-alcohol beverage according to <11>, in which a carbon dioxide gas pressure is 1.5 to 3.5 gas volumes.
<13> The low-alcohol beverage according to any one of <1> to <12>, which is packaged in a container.
<14> A method for producing a low-alcohol beverage that is a method for producing a low-alcohol beverage having an alcohol concentration of 3.0 v/v% or less, including a step of blending an aliphatic alcohol having 4 or 5 carbon atoms and gin.
<15> A method for improving a flavor of a low-alcohol beverage that is a method for improving the flavor of a low-alcohol beverage having an alcohol concentration of 3.0 v/v% or less, including a step of blending an aliphatic alcohol having 4 or 5 carbon atoms and gin.

### Examples

Hereinafter, the present invention will be described with reference to Examples and Comparative Examples, but the present invention is not limited to these. "%" represents "% by mass" unless otherwise specified.

### (1) Sensory evaluation of beverages

A sensory test was carried out by panelists trained on the beverages. Specifically, four panelists each tasted the beverage (20°C), evaluated the goodness or intensity for "alcohol-like complicated taste", "alcohol-like aftertaste", and "comprehensive evaluation of alcohol feeling" felt when tasting, on a 5-point scale with a control being 3 points according to the following evaluation criteria. After four people evaluated individually, all the members discussed and decided the score.

### · Evaluation criteria

Score 5: Felt very intense (good) compared to control
Score 4: Felt intense (good) compared to control
Score 3: same as control
Score 2: Felt weak (not good) compared to control
Score 1: Felt very weak (not good) compared to control

### (2) Test 1: Verification of influence of sweetness

Each raw material was mixed according to the formulation shown in Table 1 below to prepare a citrus beverage base liquid (alcohol 0 v/v%, acidity 0.32, carbon dioxide gas pressure 2.3 gas volumes). The citrus flavor containing limonene as a main aromatic component was used.

To the obtained citrus beverage base liquid, 5.0 ml of gin (converted to 100% alcohol) and sucrose (sweetness 1.0) were added in the contents shown in Table 2, and each beverage sample (A) 1-1 to 1-6 having the alcohol concentration of 0.5 v/v% was prepared.

For each of the obtained beverages, the sensory evaluation of (1) described above was performed using the beverage sample (A) 1-1 as a control. Table 2 shows the results.

### [Table 1]

**(Table 1)**

| Raw material | Blending amount |
|---|---|
| Citric acid (anhydrous) | 3.0 g |
| Trisodium citrate | 1.2 g |
| Citrus flavor | 1.0 g |
| Adding water | Balance |
| Total | 1000 ml |

### [Table 2]

**(Table 2)**

| | Beverage sample (A) | | | | | |
|---|---|---|---|---|---|---|
| | 1-1 | 1-2 | 1-3 | 1-4 | 1-5 | 1-6 |
| Gin (converted to 1000 alcohol) (ml) | 5.0 | 5.0 | 5.0 | 5.0 | 5.0 | 5.0 |
| Sucrose (g/L) | 0 | 20 | 40 | 60 | 80 | 100 |
| Base Liquid (ml) | Balance | Balance | Balance | Balance | Balance | Balance |
| Total (ml) | 1000 | 1000 | 1000 | 1000 | 1000 | 1000 |
| Alcohol concentration (v/v%) | 0.5 | 0.5 | 0.5 | 0.5 | 0.5 | 0.5 |
| Sweetness in terms of sucrose (g/100 ml) | 0 | 2.0 | 4.0 | 6.0 | 8.0 | 10.0 |

| Sensory evaluation results | | | | | | |
|---|---|---|---|---|---|---|
| Alcohol-like complicated taste (weak 1 ↔ strong 5) | 3 | 3 | 4 | 5 | 4 | 3 |
| Alcohol-like aftertaste (weak 1 ↔ strong 5) | 3 | 4 | 5 | 5 | 5 | 4 |
| Comprehensive evaluation of alcohol feeling (bad 1 ↔ good 5) | 3 | 4 | 5 | 5 | 4 | 2 |
| Comments | Watery | | The body feeling has been improved. | The complicated taste is present. The balance between sweetness and the alcohol feeling is good. | Sweetness is strong and the alcohol feeling has been slightly lowered. Sweetness is remained. | Sweetness is strong and alcohol feeling has been lowered. Sweetness is remained on a tongue. |

### (3) Test 2: Verification of influent of gin content

To the citrus beverage base liquid (alcohol 0 v/v%, acidity 0.32, carbon dioxide gas pressure 2.3 gas volumes) obtained in Test 1 described above, 40 g/L sucrose was blended, gin and raw material alcohol were added in the contents shown in Table 3 respectively, and each beverage sample (A) 2-1 to 2-6 having the sweetness in terms of sucrose of 4.0 g/100 ml and the alcohol concentration of 1.0 v/v was prepared.

For each of the obtained beverages, the sensory evaluation of (1) described above was performed using the beverage sample (A) 2-1 as a control. Table 3 shows the results.

### [Table 3]

**(Table 3)**

| | Beverage sample (A) | | | | | |
|---|---|---|---|---|---|---|
| | 2-1 | 2-2 | 2-3 | 2-4 | 2-5 | 2-6 |
| Gin (converted to 100% alcohol) (ml) | 0 | 1.0 | 3.0 | 5.0 | 8.0 | 10.0 |
| Raw material alcohol (converted to 100% alcohol) (ml) | 10.0 | 9.0 | 7.0 | 5.0 | 2.0 | 0 |
| Sucrose (g/L) | 40 | 40 | 40 | 40 | 40 | 40 |
| Base Liquid (ml) | Balance | Balance | Balance | Balance | Balance | Balance |
| Total (ml) | 1000 | 1000 | 1000 | 1000 | 1000 | 1000 |
| Alcohol concentration (v/v%) | 1.0 | 1.0 | 1.0 | 1.0 | 1.0 | 1.0 |
| Sweetness in terms of sucrose (g/100 ml) | 4.0 | 4.0 | 4.0 | 4.0 | 4.0 | 4.0 |

| Sensory evaluation results | | | | | | |
|---|---|---|---|---|---|---|
| Alcohol-like complicated taste (weak 1 ↔ strong 5) | 3 | 4 | 4 | 4 | 4 | 3 |
| Alcohol-like aftertaste (weak 1 ↔ strong 5) | 3 | 3 | 4 | 5 | 5 | 4 |
| Comprehensive evaluation of alcohol feeling (bad 1 ↔ good 5) | 3 | 4 | 4 | 5 | 4 | 2 |
| Comments | Watery | | The complicated taste is present to some extent. | The complicated taste and body feeling are present. The balance between citrus and alcohol feeling is good. | A bitter aftertaste is slightly remained. | A gin-derived odd taste is felt and the comprehensive alcohol feeling has been lowered. An odd taste and bitterness are strong. |

### (4) Test 3: Verification of the influence of citrus fruits-infused distilled liquor

To the citrus beverage base liquid (alcohol 0 v/v%, acidity 0.32, carbon dioxide gas pressure 2.3 gas volumes) obtained in Test 1 described above, 0.1 ml of lemon-infused distilled liquor (alcohol 55%) and 40 g/L sucrose were blended, gin and raw material alcohol were added in the contents shown in Table 4 respectively, and each beverage sample (A) 3-1 to 3-6 having the sweetness in terms of sucrose of 4.0 g/100 ml, and the alcohol concentration of 1.0 v/v% was prepared.

For each of the obtained beverages, the sensory evaluation of (1) described above was performed using the beverage sample (A) 2-1 as a control. Table 4 shows the results.

### [Table 4]

**(Table 4)**

| | Beverage sample (A) | | | | | | |
|---|---|---|---|---|---|---|---|
| | 2-1 | 3-1 | 3-2 | 3-3 | 3-4 | 3-5 | 3-6 |
| Gin (converted to alcohol) (ml) | 0 | 0 | 1.0 | 3.0 | 5.0 | 8.0 | 10.0 |
| Raw material alcohol (converted to 100% alcohol) (ml) | 10.0 | 10.0 | 9.0 | 7.0 | 5.0 | 2.0 | 0 |
| Lemon-infused distilled liquor (alcohol 55%) (ml) | 0 | 0.1 | 0.1 | 0.1 | 0.1 | 0.1 | 0.1 |
| Sucrose (g/L) | 40 | 40 | 40 | 40 | 40 | 40 | 40 |
| Base Liquid (ml) | Balance | Balance | Balance | Balance | Balance | Balance | Balance |
| Total (ml) | 1000 | 1000 | 1000 | 1000 | 1000 | 1000 | 1000 |
| Alcohol concentration (v/v%) | 1.0 | 1.0 | 1.0 | 1.0 | 1.0 | 1.0 | 1.0 |
| Sweetness in terms of sucrose (g/100 ml) | 4.0 | 4.0 | 4.0 | 4.0 | 4.0 | 4.0 | 4.0 |

| Sensory evaluation results | | | | | | | |
|---|---|---|---|---|---|---|---|
| Alcohol-like complicated taste (weak 1 ↔ strong 5) | 3 | 3 | 4 | 5 | 5 | 5 | 4 |
| Alcohol-like aftertaste (weak 1 ↔ strong 5) | 3 | 4 | 5 | 5 | 5 | 5 | 4 |
| Comprehensive evaluation of alcohol feeling (bad 1 ↔ good 5) | 3 | 4 | 5 | 5 | 5 | 5 | 3 |
| Comments | Watery | The alcohol-like aftertaste is felt. | The alcohol-like complicated taste and aftertaste are felt. | A citrus and the alcohol feeling are felt with good balance. | A citrus and the alcohol feeling are felt with good balance. | The alcohol-like complicated taste is strong. | A gin-derived odd taste is felt. Bitterness is strong. |

### (5) Test 4: Verification of gin and 2-methyl-1-propanol

Each raw material was mixed according to the formulation shown in Table 5 below to prepare a citrus beverage base liquid (alcohol 0 v/v%, acidity 0.30, carbon dioxide gas pressure 2.3 gas volumes). The citrus flavor containing limonene as a main aromatic component was used.

To the obtained citrus beverage base liquid, 5.0 ml of raw material alcohol or gin (converted to 100% alcohol) and 2-methyl-1-propanol were added in the contents shown in Table 6, and each beverage sample (B) 1-0 to 1-6 having the alcohol concentration of 0.5 v/v% was prepared.

For each of the obtained beverages, the sensory evaluation of (1) described above was performed using the beverage sample (B) 1-0 as a control. Table 6 shows the results.

### [Table 5]

**(Table 5)**

| Raw material | Blending amount |
|---|---|
| Sucrose | 40.0 g |
| Citric acid (anhydrous) | 3.0 g |
| Trisodium citrate | 1.2 g |
| Citrus flavor | 1.0 g |
| Adding water | Balance |
| Total | 1000 ml |

### [Table 6]

**(Table 6)**

| | Beverage sample (B) | | | | | | |
|---|---|---|---|---|---|---|---|
| | 1-0 | 1-1 | 1-2 | 1-3 | 1-4 | 1-5 | 1-6 |
| Gin (converted to 100% alcohol) (ml) | 0 | 5.0 | 5.0 | 5.0 | 5.0 | 5.0 | 5.0 |
| Raw material alcohol (converted to 100% alcohol) (ml) | 5.0 | 0 | 0 | 0 | 0 | 0 | 0 |
| 2-methyl-1-propanol (ppm) | 0 | 0 | 0.1 | 1.0 | 10.0 | 50.0 | 100.0 |
| Base Liquid (ml) | Balance | Balance | Balance | Balance | Balance | Balance | Balance |
| Total (ml) | 1000 | 1000 | 1000 | 1000 | 1000 | 1000 | 1000 |
| Alcohol concentration (v/v%) | 0.5 | 0.5 | 0.5 | 0.5 | 0.5 | 0.5 | 0.5 |

| Sensory evaluation results | | | | | | | |
|---|---|---|---|---|---|---|---|
| Alcohol-like complicated taste (weak 1 ↔ strong 5) | 2 | 3 | 4 | 5 | 5 | 5 | 4 |
| Alcohol-like aftertaste (weak 1 ↔ strong 5) | 2 | 3 | 3 | 4 | 5 | 5 | 4 |
| Comprehensive evaluation of alcohol feeling (bad 1 ↔ good 5) | 2 | 3 | 4 | 5 | 5 | 5 | 3 |
| Comments | It is easy to drink, but a different flavor from soft drink is felt. Watery. | The herbal flavor is felt. | The body feeling has been improved. | The body feeling is present to some extent. The complicated taste is sufficiently present, but the aftertaste is required a bit more. | Matured. Both of the complicated taste and the aftertaste have a best balance. | | The pungent odor other than alcohol is felt. The aftertaste is bitter. |

### (6) Test 5: Verification of gin and 3-methyl-1-butanol

Beverages were prepared in the same manner as in Test 4 except that 3-methyl-1-butanol was used in place of 2-methyl-1-propanol in Test 4 described above, and each beverage sample (B) 2-0 to 2-6 was obtained.

For each of the obtained beverages, the sensory evaluation of (1) described above was performed using the beverage sample (B) 2-0 as a control. Table 7 shows the results.

### [Table 7]

**(Table 7)**

| | Beverage sample (B) | | | | | | |
|---|---|---|---|---|---|---|---|
| | 2-0 | 2-1 | 2-2 | 2-3 | 2-4 | 2-5 | 2-6 |
| Gin (converted to 100% alcohol) (ml) | 0 | 5.0 | 5.0 | 5.0 | 5.0 | 5.0 | 5.0 |
| Raw material alcohol (converted to 100% alcohol) (ml) | 5.0 | 0 | 0 | 0 | 0 | 0 | 0 |
| 3-methyl-1-butanol (ppm) | 0 | 0 | 0.1 | 1.0 | 10.0 | 50.0 | 100.0 |
| Base Liquid (ml) | Balance | Balance | Balance | Balance | Balance | Balance | Balance |
| Total (ml) | 1000 | 1000 | 1000 | 1000 | 1000 | 1000 | 1000 |
| Alcohol concentration (v/v%) | 0.5 | 0.5 | 0.5 | 0.5 | 0.5 | 0.5 | 0.5 |

| Sensory evaluation results | | | | | | | |
|---|---|---|---|---|---|---|---|
| Alcohol-like complicated taste (weak 1 - strong 5) | 2 | 3 | 4 | 5 | 5 | 5 | 4 |
| Alcohol-like aftertaste (weak 1 - strong 5) | 2 | 3 | 4 | 5 | 5 | 5 | 3 |
| Comprehensive evaluation of alcohol feeling (bad 1 - good 5) | 2 | 3 | 4 | 5 | 5 | 5 | 2 |
| Comments | Watery | | | The aftertaste is present. | An alcohol-like richness is sufficientl y present. | A sweet aftertaste is present. | The pungent odor other than alcohol is felt. Kind of a solvent. The taste is remained on a tongue. |

### (7) Test 6: Verification in a case of containing 2-methyl-1-propanol and changing the concentration of gin added

Using the citrus beverage base liquid (alcohol 0 v/v%, acidity 0.32, carbon dioxide gas pressure 2.3 gas volumes) obtained in Test 4 described above, 2-methyl-1-propanol was blended to 10 ppm, gin and raw material alcohol were added in the contents shown in Table 8 respectively, and each beverage sample (B) 3-1 to 3-6 was prepared.

For each of the obtained beverages, the sensory evaluation of (1) described above was performed using the beverage sample (B) 3-1 as a control. Table 8 shows the results.

### [Table 8]

**(Table 8)**

| | Beverage sample (B) | | | | | |
|---|---|---|---|---|---|---|
| | 3-1 | 3-2 | 3-3 | 3-4 | 3-5 | 3-6 |
| Gin (converted to 100% alcohol) (ml) | 0 | 1.0 | 5.0 | 10.0 | 20.0 | 30.0 |
| Raw material alcohol (converted to 100% alcohol) (ml) | 10.0 | 9.0 | 5.0 | 0 | 10.0 | 0 |
| 2-methyl-1-propanol (ppm) | 10.0 | 10.0 | 10.0 | 10.0 | 10.0 | 10.0 |
| Base Liquid (ml) | Balance | Balance | Balance | Balance | Balance | Balance |
| Total (ml) | 1000 | 1000 | 1000 | 1000 | 1000 | 1000 |
| Alcohol concentration (v/v%) | 1.0 | 1.0 | 1.0 | 1.0 | 3.0 | 3.0 |

| Sensory evaluation results | | | | | | |
|---|---|---|---|---|---|---|
| Alcohol-like complicated taste (weak 1 ↔ strong 5) | 3 | 4 | 5 | 5 | 4 | 3 |
| Alcohol-like aftertaste (weak 1 ↔ strong 5) | 3 | 4 | 5 | 5 | 5 | 3 |
| Comprehensive evaluation of alcohol feelina (bad 1 ↔ good 5) | 3 | 4 | 5 | 5 | 4 | 2 |
| Comments | | | | | | The essence of gin is strong and the comprehensive evaluation is low. The aftertaste is bitter. |

This application claims priority based on Japanese Patent Application No. 2021-033496 filed on March 3, 2021 and Japanese Patent Application No. 2021-033497 filed on March 3, 2021, the disclosure of which is hereby incorporated in its entirety.

## Claims

1. A low-alcohol beverage that is a citrus-savored low-alcohol beverage having an alcohol concentration of 3.0 v/v% or less,
wherein the low-alcohol beverage contains 0.1 to 2.5 v/v% gin converted to 100% of alcohol.

2. The low-alcohol beverage according to claim 1,
wherein sweetness in terms of sucrose is 2.0 to 8.0 g/100 ml.

3. The low-alcohol beverage according to claim 1 or 2,
wherein the alcohol concentration is less than 1.0 v/v%.

4. The low-alcohol beverage according to any one of claims 1 to 3,
wherein the low-alcohol beverage contains 0.1 to 80 ppm of an aliphatic alcohol having 4 or 5 carbon atoms.

5. The low-alcohol beverage according to claim 4,
wherein the aliphatic alcohol having 4 or 5 carbon atoms includes one or two or more selected from the group consisting of 2-methyl-1-propanol, 3-methyl-1-butanol, 1-butanol, and 1-pentanol.

6. The low-alcohol beverage according to claim 4 or 5,
wherein the aliphatic alcohol having 4 or 5 carbon atoms includes one or two selected from the group consisting of 2-methyl-1-propanol and 3-methyl-1-butanol.

7. The low-alcohol beverage according to any one of claims 1 to 6,
wherein the low-alcohol beverage contains a citrus fruits-infused distilled liquor.

8. The low-alcohol beverage according to any one of claims 1 to 7,
wherein the low-alcohol beverage does not contain fruit juice.

9. The low-alcohol beverage according to any one of claims 1 to 8,
wherein the low-alcohol beverage does not contain a high-sweetness sweetener.

10. The low-alcohol beverage according to any one of claims 1 to 9,
wherein acidity in terms of citric acid is 0.20 g/100 ml or more.

11. The low-alcohol beverage according to any one of claims 1 to 10,
wherein the low-alcohol beverage contains carbon dioxide gas.

12. The low-alcohol beverage according to claim 11,
wherein a carbon dioxide gas pressure is 1.5 to 3.5 gas volumes.

13. The low-alcohol beverage according to any one of claims 1 to 12,
wherein the low-alcohol beverage is a packaged beverage.

14. A method for producing a low-alcohol beverage, that is a method for producing a citrus-savored low-alcohol beverage having an alcohol concentration of 3.0 v/v% or less, the method comprising:
a step of blending 0.1 to 2.5 v/v% gin converted to 100% of alcohol.

15. A method for improving a flavor of a low-alcohol beverage, that is a method for improving a flavor of a citrus-savored low-alcohol beverage having an alcohol concentration of 3.0 v/v% or less, the method comprising:
a step of blending 0.1 to 2.5 v/v% gin converted to 100% of alcohol.
